# EUROPÄISCHE PATENTSCHRIFT

(11) **EP 1 447 194 B1**
(45) Veröffentlichungstag und Bekanntmachung des Hinweises auf die Patenterteilung: **28.09.2005**
(21) Anmeldenummer: 03027516.8
(22) Anmeldetag: 29.11.2003
(51) Int. Cl.: B28D 1/04, B23Q 11/00

(54) **Bohrerhalter für einen Hohlbohrer**
Drill holder for a core drill
Affûteuse de forets pour des forets tubulaire

(30) Priorität: 12.02.2003 DE 10305706
(43) Veröffentlichungstag der Anmeldung: 18.08.2004
(73) Patentinhaber: Narex Ceska Lipa a.s., 47037 Ceska Lipa (CZ)
(72) Erfinder: Biedron, Ralf, 44879 Bochum (DE); Kirchner, Manfred, Dr., 73230 Neidlingen (DE)
(74) Vertreter: Reimold, Otto

(56) Entgegenhaltungen:
- DE-A- 19 818 284
- US-A- 2 918 260

## Beschreibung

Die Erfindung betrifft einen Bohrerhalter gemäß den Oberbegriff von Anspruch 1, wie er z. Bsp. aus der DE 19818284 bekannt ist , an dem ein Hohlbohrer zum Bohren von Mauerwerk oder Beton befestigbar ist, mit einem mit der Abtriebswelle einer Handbohrmaschine verbindbaren Schaft und einem Staubabsauggehäuse, das eine mit einem Saugschlauch zum Absaugen des beim Bohren entstehenden Staubs verbindbare Anschlussöffnung aufweist.

Zum Einbringen von Bohrungen in Mauerwerk oder Beton werden Hohlbohrer verwendet, die ein Rohrstück aufweisen, an dessen dem zu bohrenden Werkstück zugewandte Stirnseite über den Umfang verteilt angeordnete Materialabtragselemente angesetzt sind, deren Wandstärke größer als die des Rohrstücks ist. Auf diese Weise erhält man einen zylindrischen, den Bohrkern umschließenden Bohrspalt, der breiter als die Wandstärke des Rohrstückes ist.

Bei den Bohrungen kann es sich um Sackbohrungen beispielsweise zur Aufnahme von Steckdosen oder Verteilerdosen oder um durchgehende Bohrungen handeln.

Beim Bohren von Mauerwerk oder Beton entsteht viel Staub. Dieser Staub kann nur durch den Bohrspalt am Rohrstück vorbei aus dem Werkstück nach außen gelangen. Um auch bei tiefen Bohrungen eine sichere Staubabfuhr zu erhalten und um die Staubentwicklung in der Umgebung zu minimieren, ist es bereits bekannt, am den Bohrer haltenden Bohrerhalter ein Staubabsauggehäuse anzuordnen, das über einen Saugschlauch mit einem Sauggerät verbunden werden kann, so dass auf den Bohrstaub eine ihn durch das Staubsauggehäuse und den Saugschlauch zum Sauggerät fördernde Kraft ausgeübt wird.

Es gibt jedoch auch Anwendungsfälle, beispielsweise wenn es sich um eine wenig tiefgehende Bohrung handelt, bei denen keine Staubabsaugung erforderlich ist. Ferner steht nicht immer ein Sauggerät zur Verfügung.

Bei dem bekannten Bohrerhalter ist das Staubabsauggehäuse drehbar am Schaft gelagert. Das Arbeiten mit einem solchen Bohrerhalter ist zufriedenstellend, wenn der Betrieb mit angeschlossenem Saugschlauch und Sauggerät erfolgt. Arbeitet man dagegen ohne Staubabsaugung, ist insbesondere der an der Anschlussöffnung vorhandene Anschlussstutzen hinderlich. Ausgehend hiervon liegt der vorliegenden Erfindung die Aufgabe zugrunde, einen Bohrerhalter der eingangs genannten Art zu schaffen, bei dem das Staubabsauggehäuse nicht stört, wenn man ohne Staubabsaugung bohrt.

Diese Aufgabe wird erfindungsgemäß durch einen Bohrerhalter gemäß Anspruch 1 gelöst.

Auf diese Weise liegt ein zweiteiliges Staubabsauggehäuse vor, dessen Gehäuse-Lagerteil ständig am Bohrerhalter verbleibt, während das Gehäuse-Außenteil, an dem die Anschlussöffnung und somit regelmäßig auch ein Anschlussstutzen angeordnet ist, bei Nichtbedarf ohne Zuhilfenahme eines Werkzeugs weggenommen werden kann, so dass es beim Arbeiten ohne Staubabsaugung nicht stört.

Zweckmäßige Ausgestaltungen der Erfindung sind in den Unteransprüchen angegeben.

Nachstehend wird ein Ausführungsbeispiel der Erfindung anhand der Zeichnung erläutert. Es zeigen:
- Fig. 1: einen erfindungsgemäßen Bohrerhalter mit an ihm befestigtem Hohlbohrer zusammen mit einem Werkstück in einem Axialschnitt,

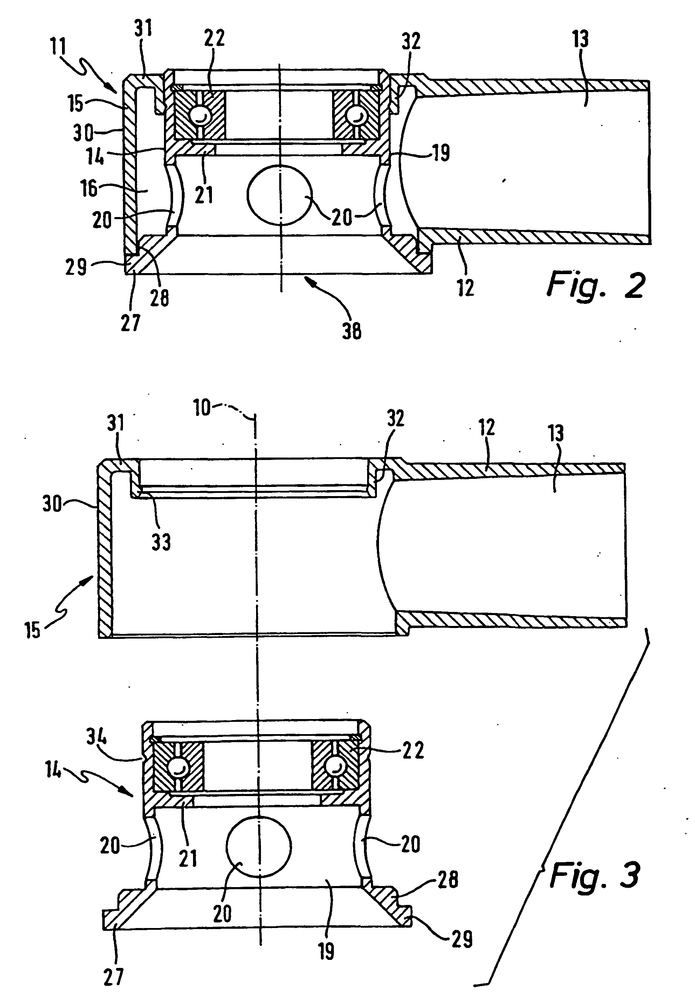

- Fig. 2: das Staubabsauggehäuse des Bohrerhalters nach Fig. 1 in gesonderter Darstellung im der Fig. 1 entsprechenden Schnitt und
- Fig. 3: das Staubabsauggehäuse nach Fig. 2, wobei das Gehäuse-Außenteil vom Gehäuse-Lagerteil entfernt ist, in der gleichen Schnittdarstellung.

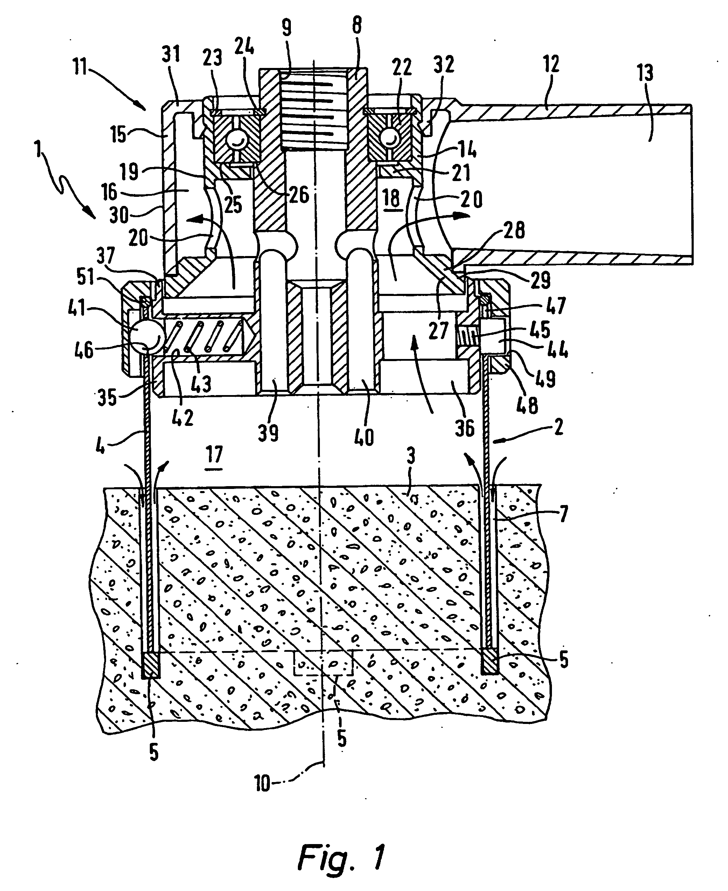

Aus Fig. 1 geht ein Bohrerhalter 1 hervor, an dem ein Hohlbohrer 2 lösbar befestigt ist, mit dem in ein von Mauerwerk oder Beton gebildetes Werkstück 3 eine Bohrung eingebracht werden kann. Der Hohlbohrer 2 wird im Wesentlichen von einem Rohrstück 4 gebildet, das an seinem dem Werkstück 3 zugewandten Ende stirnseitig angeordnete, über den Umfang verteilte Materialabtragselemente 5 trägt, mit denen der Materialabtrag am Werkstück 3 bewirkt wird. Die Materialabtragselemente 5 bestehen beispielsweise aus einem Diamant-Werkstoff. Die Wandstärke 6 der Materialabtragselemente 5 ist größer als die Wandstärke des Rohrstücks 4, so dass sich im Werkstück 3 ein Bohrspalt 7 ergibt, der breiter als die Wandstärke des Rohrstücks 2 ist.

Der Bohrerhalter 1 wird an der nicht dargestellten Abtriebswelle einer Handbohrmaschine befestigt. Hierzu weist der Bohrerhalter 1 einen axial gerichteten Schaft 8 mit einem Innengewinde 9 zum Aufschrauben auf die Abtriebswelle der Handbohrmaschine auf. Im montierten Zustand ist der Bohrerhalter 1 drehfest mit der Abtriebswelle der Handbohrmaschine und der Hohlbohrer 2 drehfest mit dem Bohrerhalter 1 verbunden, so dass der Hohlbohrer 2 beim Betrieb um die Rotationsachse 10 rotiert.

Der beim Bohren entstehende Staub kann abgesaugt werden. Hierzu ist am Bohrerhalter 1 ein Staubabsauggehäuse 11 angeordnet, das eine beim Ausführungsbeispiel von einem Anschlussstutzen 12 gebildete Anschlussöffnung 13 aufweist, an die ein zu einem Sauggerät führender Saugschlauch angeschlossen werden kann.

Das Staubabsauggehäuse 11 enthält ein drehbar am Schaft 8 gelagertes Gehäuse-Lagerteil 14 und ein Gehäuse-Außenteil 15, das im montierten Falle (Fig. 1) werkzeuglos lösbar mit dem Gehäuse-Lagerteil 14 verbunden ist. Bei der Montage wird das Gehäuse-Außenteil 15 über den Schaft 8 gesteckt und mit dem Gehäuse-Lagerteil 14 verbunden. In dem Falle, dass, aus welchem Grunde auch immer, ohne gleichzeitige Staubabsaugung gebohrt werden soll, kann das Gehäuse-Außenteil 15 entfernt werden, so dass es beim Bohren nicht hindert.

Das Gehäuse-Außenteil 15 weist eine im Wesentlichen hülsenförmige Gestalt mit seitlich angeordnetem Anschlussstutzen 12 auf. Im montierten Zustand umschließt das Gehäuse-Außenteil 15 einen Absaugraum 16, der einerseits bei befestigtem Hohlbohrer 2 mit dem Bohrer-Innenraum 17 und andererseits mit der Anschlussöffnung 13 verbunden ist. Auf diese Weise wird der an den Materialabtragselementen 5 entstehende Bohrstaub im Bohrspalt 7 innen am Rohrstück 4 vorbei zum Bohrer-Innenraum 17 und dann in den Absaugraum 16 gesaugt (siehe die eingezeichneten Pfeile), so dass er zur Anschlussöffnung 13 und von dort durch den angeschlossenen Saugschlauch zum Sauggerät gelangt. Dabei wird durch den radial außen am Rohrstück 4 angeordneten Bereich des Bohrspaltes 7 Außenluft angesaugt, so dass sich am Boden des Bohrspaltes 7 ein um die Stirnseite des Rohrstücks 4 herumstreichender Luftstrom und somit sozusagen ein den Bohrstaub an seinem Entstehungsort wegblasender Blaseffekt ergibt.

Das Gehäuse-Lagerteil 14 weist im dargestellten Falle eine mindestens der axialen Länge des Gehäuse-Außenteils 15 entsprechende Länge auf, so dass das Gehäuse-Außenteil 15 im Bereich seiner beiden Stirnenden am Gehäuse-Lagerteil 14 gelagert werden kann.

Das Gehäuse-Lagerteil 14 umschließt zweckmäßigerweise den Schaft 8 unter Bildung eines Ringraums 18, über den der Absaugraum 16 mit dem Bohrer-Innenraum 17 verbunden ist. Dabei bildet das Gehäuse-Lagerteil 14 eine zwischen dem Absaugraum 16 und dem Ringraum 18 angeordnete Ringwand 19, die über den Umfang verteilte Durchtrittsausnehmungen 20 für den Durchtritt des Staubes vom Ringraum 18 zum Absaugraum 16 enthält. Die Ringwand 19 weist eine hülsenartige Gestalt auf. Sie ist in axialer Richtung länger als der Ringraum 18, der in Richtung zum Ende des Schaftes 8 hin durch eine von der Ringwand 19 zum Schaft 8 verlaufende Querwand 21 abgeschlossen ist. Zwischen dem über den Ringraum 18 hinaus verlängerten Bereich der Ringwand 19 und dem benachbarten Bereich des Schaftes 8 befindet sich ein Drehlager 22, durch das das Gehäuse-Lagerteil 14 verdrehbar am Schaft 8 gelagert ist, so dass es beim Bohren die Rotation des Schaftes 8 nicht mitmacht. Das Drehlager 22 ist nach axial außen hin durch zwei Sicherungsringe 23, 24 gesichert, von denen der eine Sicherungsring 23 am Gehäuse-Lagerteil und der andere Sicherungsring 24 am Schaft 8 festgelegt ist. Nach axial innen hin stützt sich das Drehlager 22 an Lagerabsätzen 25, 26 am Gehäuse-Lagerteil 14 bzw. am Schaft 8 ab.

Das Gehäuse-Lagerteil 14 verbleibt stets am Schaft 8. Sein Durchmesser ist verhältnismäßig klein, so dass es beim Arbeiten nicht stört, wenn das Gehäuse-Außenteil 15 weggenommen ist.

Das Gehäuse-Lagerteil 14 weist ferner an seinem bei befestigtem Hohlbohrer 4 diesem zugewandten Endbereich einen mit Bezug auf die Ringwand 19 radial nach außen hin abstehenden Ringvorsprung 27 auf, mit dem das zugeordnete Ende des Gehäuse-Außenteils 15 zusammensteckbar ist. Der Ringvorsprung 27 ist gestuft ausgebildet, so dass er eine in das Gehäuse-Außenteil 15 passende Stufenpartie 28 und eine radial vorstehende Anschlagpartie 29 bildet, gegen die die Stirnseite des Gehäuse-Außenteils 15 stößt. Der Ringvorsprung 27 schließt den Absaugraum 16 stirnseitig ab.

Das Gehäuse-Außenteil 15 bildet ferner an seinem bei befestigtem Hohlbohrer 2 diesem abgewandten Endbereich eine von seiner Umfangswand 30 nach radial innen bis zum Gehäuse-Lagerteil 14 reichende, ringförmige Abschlusswand 31. Beim Ausführungsbeispiel ist an die Abschlusswand 31 radial innen eine Halspartie 32 L-artig angesetzt. Der Innendurchmesser der Halspartie 32 bzw. bei fehlender Halspartie der Innendurchmesser der Abschlusswand 31 entspricht dem Außendurchmesser des Gehäuse-Lagerteils 14, so dass die Halspartie 32 bzw. die Abschlusswand 31 mit dem Gehäuse-Lagerteil 14 zusammengesteckt ist.

Somit ergibt sich im Bereich der beiden axialen Enden des Gehäuse-Außenteils 15 jeweils eine Steckverbindung zwischen dem Gehäuse-Außenteil 15 und dem Gehäuse-Lagerteil 14. Dieses Zusammenstecken kann klemmend und/oder verrastend erfolgen, so dass das Gehäuse-Außenteil 15 werkzeuglos aufgesteckt oder abgezogen werden kann und dabei im aufgesteckten Zustand sicher hält. Beim Ausführungsbeispiel ist an der Halspartie 32 ein umlaufender Ringvorsprung 33 angeordnet, dem eine entsprechende Rastvertiefung 34 am Gehäuse-Lagerteil 14 zugeordnet ist. Beim Aufstecken des Gehäuse-Außenteils 15 schnappt der Rastvorsprung 33 in die Rastvertiefung 34.

Der Bohrerhalter 1 weist des Weiteren an seinem bei befestigtem Hohlbohrer 2 diesem zugewandten Endbereich ein tellerartiges Befestigungsteil 35 auf. Das tellerartige Befestigungsteil 35 schließt an den Schaft 8 an und ist zweckmäßigerweise einstückig mit diesem verbunden. Das Befestigungsteil 35 weist ferner einen im Wesentlichen kreisrunden Außenumfang auf und ist bei montiertem Hohlbohrer 2 in die zugewandte Stirnseite des Rohrstücks 4 eingesteckt, so dass das tellerartige Befestigungsteil 35 den Bohrer-Innenraum 17 überdeckt. Das Befestigungsteil 35 dient, wie noch erläutert wird, zum Befestigen des Hohlbohrers 2. Es enthält eine oder mehrere über den Umfang verteilte Durchgangsöffnungen 36, durch die hindurch der Absaugraum 16 mit dem Bohrer-Innenraum 17 verbunden ist. Der den Bohrstaub enthaltende Saugstrom gelangt somit vom Bohrer-Innenraum 17 durch die Durchgangsöffnungen 36 des Befestigungsteils 35 in den Ringraum 18 und dann durch die mindestens eine Durchtrittsausnehmung 20 in den Absaugraum 16.

Das den Schaft 8 unter Bildung des Ringraums 18 umschließende Gehäuse-Lagerteil 14 erstreckt sich bis zum tellerartigen Befestigungsteil 35 und überdeckt den die Durchgangsöffnungen 36 enthaltenden Bereich des Befestigungsteils 35. Dabei ist der Übergang zwischen den Durchgangsöffnungen 36 des Befestigungsteils 35 und dem Ringraum 18 nach außen hin abgeschlossen. Hierzu ist zweckmäßigerweise vorgesehen, dass das tellerartige Befestigungsteil 35 an seiner dem Staubabsauggehäuse 11 zugewandten Oberseite eine hochstehende Umfangswand 37 aufweist, die den zugewandten Endbereich des Gehäuse-Lagerteils 14 in axialer Richtung außen übergreift. Beim Ausführungsbeispiel wird dieser Endbereich von dem Ringvorsprung 27 gebildet, der mit Steckspiel in den von der Umfangswand 37 umschlossenen Raum passt. Das Gehäuse-Lagerteil 14 ist an seiner dem tellerartigen Befestigungsteil 35 zugewandten Unterseite 38 offen.

Die aus Fig. 1 ersichtlichen Bohrungen 39, 40, die sich von der Unterseite des Bohrerhalters 1 in den Schaft 8 erstrecken, dienen nicht zur Staubabsaugung, sondern zur Befestigung einer nicht dargestellten Zentrierbohreinheit, zu der ein zentral angeordneter Zentrierbohrer gehört, der sich in axialer Richtung bis vor die Stirnseite des Hohlbohrers 2 erstreckt. Die beiden Bohrungen 39, 40 dienen zur Aufnahme von Steckzapfen der Zentrierbohreinheit.

Die Befestigung des Hohlbohrers 2 am Bohrerhalter 1 erfolgt im dargestellten Falle wie folgt:

Das Befestigungsteil 35 weist über den Umfang verteilte Rastkugeln 41 auf, die jeweils durch eine in einer Sackbohrung 42 des Befestigungsteils 35 angeordnete Schraubenfeder 43 nach radial außen hin belastet sind. Ferner sind am Umfang des Befestigungsteils 35 mehrere in Umfangsrichtung verteilt angeordnete Mitnahmeelemente 44 vorhanden, die nach radial außen abstehen und beim Ausführungsbeispiel von den Kopfstücken von in das Befestigungsteil eingeschraubten Gewindebolzen 45 gebildet werden.

Ferner sind am zugewandten Endbereich des Rohrstücks 4 den Rastkugeln 41 zugeordnete Rastlöcher 46 und den Mitnahmeelementen 44 zugeordnete, stirnseitig offene Mitnahmeausnehmungen 47 vorhanden. Bei der Montage wird das Rohrstück 4 des Hohlbohrers 2 in axialer Richtung auf das Befestigungsteil 35 gesteckt, so dass die Mitnahmeelemente 44 in die Mitnahmeausnehmungen 47 gelangen und somit eine drehfeste Verbindung hergestellt wird. Ferner werden die Rastkugeln 41 zunächst nach radial innen verdrängt und schnappen dann in die Rastlöcher 46.

Um ein Verriegeln des Hohlbohrers 2 mit dem Befestigungsteil 35 zu erhalten, wird das Befestigungsteil 35 von einem Betätigungsring 48 umschlossen, der langlochartige Führungsschlitze 49 enthält, die sich im Wesentlichen in Umfangsrichtung erstrecken und dabei mindestens teilweise etwas geneigt zur Umfangsrichtung verlaufen. Die Mitnahmeelemente 44 greifen in die Führungsschlitze 49 ein, so dass der Betätigungsring 48 verdrehbar auf den Mitnahmeelementen 44 gelagert ist. Zwischen dem Außenumfang des Befestigungsteils 35 und dem Innenumfang des Betätigungsrings 48 ist ein umlaufender Ringspalt vorhanden, in den das Rohrstück 4 gesteckt wird.

Der Betätigungsring 48 ist zwischen einer Lösestellung, in der das Rohrstück 4 in den genannten Ringspalt gesteckt und aus diesem herausgezogen werden kann, und einer dargestellten Spannstellung verdrehbar, in der der Hohlbohrer 2 in axialer Richtung verriegelt und verspannt ist. Hierzu sind am Innenumfang des Betätigungsrings 48 jeweils einer Rastkugel 41 zugeordnete Vertiefungsbereiche 50 vorhanden, in die die Rastkugeln in der Spannstellung eintreten. Die Rastkugeln 41 stehen dann so weit aus den Rastlöchern des Rohrstücks 4 vor, dass eine in axialer Richtung auf den Hohlbohrer 2 ausgeübte Kraft die Rastkugeln 41 nicht in das Befestigungsteil 35 zurückdrängen kann.

In der Lösestellung des Betätigungsrings 48 liegen die Rastkugeln 41 am nicht vertieften Innenumfang des Betätigungsrings 48 an.

Da die Führungsschlitze 49 des Betätigungsrings 48 mindestens teilweise etwas geneigt zur Umfangsrichtung verlaufen, schraubt sich der Betätigungsring 48 bei seinem Verdrehen aus der Lösestellung in die Spannstellung in axialer Richtung etwas nach vorne zum Hohlbohrer 2 hin, so dass eine am Betätigungsring 48 angeordnete, zweckmäßigerweise von einem eingelegten Reibring 51 gebildete Anlagefläche gegen die Stirnseite des Rohrstücks 4 gedrückt wird.

## Patentansprüche

1. Bohrerhalter, an dem ein Hohlbohrer zum Bohren von Mauerwerk oder Beton befestigbar ist, mit einem mit der Abtriebswelle einer Handbohrmaschine verbindbaren Schaft und einem Staubabsauggehäuse, das eine mit einem Saugschlauch zum Absaugen des beim Bohren entstehenden Staubs verbindbare Anschlussöffnung aufweist, **dadurch gekennzeichnet, dass** das Staubabsauggehäuse (11) ein drehbar am Schaft (8) gelagertes Gehäuse-Lagerteil (14) und ein in axialer Richtung über den Schaft (8) steckbares und werkzeuglos lösbar mit dem Gehäuse-Lagerteil (14) verbindbares Gehäuse-Außenteil (15) aufweist, wobei das Gehäuse-Außenteil (15) im mit dem Gehäuse-Lagerteil (14) verbundenen Zustand einen Absaugraum (16) umschließt, der einerseits bei befestigtem Hohlbohrer (2) mit dem Bohrer-Innenraum (17) und andererseits mit der am Gehäuse-Außenteil (15) angeordneten Anschlussöffnung (13) verbunden ist.

2. Bohrerhalter nach Anspruch 1, **dadurch gekennzeichnet, dass** das Gehäuse-Lagerteil (14) den Schaft (8) unter Bildung eines Ringraums (18) umschließt, über den der Absaugraum (16) mit dem Bohrer-Innenraum (17) verbunden ist.

3. Bohrerhalter nach Anspruch 2, **dadurch gekennzeichnet, dass** das Gehäuse-Lagerteil (14) eine zwischen dem Absaugraum (16) und dem Ringraum (18) angeordnete Ringwand (19) bildet, die mindestens eine Durchtrittsausnehmung (20) enthält.

4. Bohrerhalter nach Anspruch 3, **dadurch gekennzeichnet, dass** das Gehäuse-Lagerteil (14) an seinem bei befestigtem Hohlbohrer (2) diesem zugewandten Endbereich einen mit Bezug auf die Ringwand (19) radial nach außen hin abstehenden Ringvorsprung (27) aufweist, mit dem das zugeordnete Ende des Gehäuse-Außenteils (15) zusammensteckbar ist.

5. Bohrerhalter nach einem der Ansprüche 2 bis 4, **dadurch gekennzeichnet, dass** das Gehäuse-Lagerteil (14) an seinem bei befestigtem Hohlbohrer (2) diesem abgewandten Endbereich drehbar am Schaft (8) gelagert ist.

6. Bohrerhalter nach einem der Ansprüche 2 bis 5, **dadurch gekennzeichnet, dass** das Gehäuse-Außenteil (15) an seinem bei befestigtem Hohlbohrer (2) diesem abgewandten Endbereich eine nach radial innen bis zum Gehäuse-Lagerteil (14) reichende, ringförmige Abschlusswand (31) bildet.

7. Bohrerhalter nach Anspruch 6, **dadurch gekennzeichnet, dass** die Abschlusswand (31) oder eine radial innen an die Abschlusswand L-artig angesetzte Halspartie (32) des Gehäuse-Außenteils (15) mit dem Gehäuse-Lagerteil (14) zusammengesteckt ist.

8. Bohrerhalter nach einem der Ansprüche 1 bis 7, **dadurch gekennzeichnet, dass** das Gehäuse-Außenteil (15) klemmend und/oder verrastend mit dem Gehäuse-Lagerteil (14) zusammensteckbar ist.

9. Bohrerhalter nach einem der Ansprüche 1 bis 8, **dadurch gekennzeichnet, dass** der Bohrerhalter (1) an seinem bei befestigtem Hohlbohrer (2) diesem zugewandten Endbereich ein tellerartiges Befestigungsteil (35) zum den Bohrer-Innenraum (17) überdeckenden Eingreifen in den Hohlbohrer (2) und Befestigen des Hohlbohrers (2) aufweist, das mindestens eine axial gerichtete Durchgangsöffnung (36) enthält, durch die hindurch der Absaugraum (16) mit dem Bohrer-Innenraum (17) verbunden ist.

10. Bohrerhalter nach Anspruch 9, **dadurch gekennzeichnet, dass** sich das den Schaft (8) unter Bildung des Ringraums (18) umschließende Gehäuse-Lagerteil (14) bis zum tellerartigen Befestigungsteil (35) erstreckt und zumindest den die mindestens eine Durchgangsöffnung (36) enthaltenden Bereich des tellerartigen Befestigungsteils (35) überdeckt.

11. Bohrerhalter nach Anspruch 10, **dadurch gekennzeichnet, dass** das tellerartige Befestigungsteil (35) an seiner dem Staubabsauggehäuse (11) zugewandten Oberseite eine hochstehende Umfangswand (37) aufweist, die den zugewandten Endbereich des Gehäuse-Lagerteils (14) in axialer Richtung außen übergreift.

12. Bohrerhalter nach Anspruch 10 oder 11, **dadurch gekennzeichnet, dass** das Gehäuse-Lagerteil (14) an seiner dem tellerartigen Befestigungsteil (35) zugewandten Unterseite (38) offen ist.

## Claims

1. Drill holder to which a hollow drill for drilling masonry or concrete can be attached, with a shank connectable to the drive shaft of a hand-held drill and with a dust extraction housing incorporating a connecting port for connection to a suction hose for extracting the dust generated by drilling, **characterised in that** the dust extraction housing (11) comprises a housing bearing part (14) rotatably mounted on the shank (8) and a housing outer part (15) pluggable onto the shank (8) in the axial direction and releasably and without tools connectable to the housing bearing part (14), the housing outer part (15) enclosing, when connected to the housing bearing part (14), an extraction chamber (16), which is on the one hand connected to the drill interior (17) of the mounted hollow drill (2) and on the other hand to the connecting port (13) on the housing outer part (15).

2. Drill holder according to claim 1, **characterised in that** the housing bearing part (14) encloses the shank (8) while forming an annular space (18), which connects the extraction chamber (16) to the drill interior (17).

3. Drill holder according to claim 2, **characterised in that** the housing bearing part (14) forms an annular wall (19) with at least one through-recess (20) between the extraction chamber (16) and the annular space (18).

4. Drill holder according to claim 3, **characterised in that** the housing bearing part (14) features, in the end area facing the mounted hollow drill (2), an annular projection (21) projecting radially outwards relative to the annular wall (19), which can be plugged together with the associated end of the housing outer part (15).

5. Drill holder according to any of claims 2 to 4, **characterised in that** the end area of the housing bearing part (14) which is remote from the mounted hollow drill (2) is rotatably mounted on the shank (8).

6. Drill holder according to any of claims 2 to 5, **characterised in that** the end area of the housing outer part (15) which is remote from the mounted hollow drill (2) forms an annular end wall (31) extending radially inwards to the housing bearing part (14).

7. Drill holder according to claim 6, **characterised in that** the end wall (31) or a neck section (32) of the housing outer part (15), which is attached in an L-formation radially inside to the end wall, is plugged together with the housing bearing part (14).

8. Drill holder according to any of claims 1 to 7, **characterised in that** the housing outer part (15) can be plugged together with the housing bearing part (14) in a clamping and/or latching action.

9. Drill holder according to any of claims 1 to 8, **characterised in that** the end section of the drill holder (1) facing the mounted hollow drill (2) features a plate-like mounting part (35) for engagement with the hollow drill (2) while covering the drill interior (17) and for attaching the hollow drill (2), which has at least one axially oriented through-opening (36) connecting the extraction chamber (16) to the drill interior (17).

10. Drill holder according to claim 9, **characterised in that** the housing bearing part (14) enclosing the shank (8) while forming the annular space (18) extends to the plate-like mounting part (35) and covers at least that area of the plate-like mounting part (35) which contains the at least one through-opening (36).

11. Drill holder according to claim 10, **characterised in that** the top of the plate-like mounting part (35), which faces the dust extraction housing (11), features an upward-projecting circumferential wall (37) overlapping the adjacent end area of the housing bearing part (14) in the axial direction on the outside.

12. Drill holder according to claim 10 or 11, **characterised in that** the underside (38) of the housing bearing part (14), which faces the plate-like mounting part (35), is open.

## Revendications

1. Porte-mèche auquel peut être fixée une mèche creuse pour percer un ouvrage de maçonnerie ou du béton, avec une tige pouvant être reliée à l'arbre de sortie d'une perceuse manuelle ainsi qu'un boîtier d'aspiration de poussière qui comporte une ouverture de raccordement pouvant être reliée à un tuyau d'aspiration pour aspirer la poussière due au perçage, **caractérisé en ce que** le boîtier d'aspiration de poussière (11) comporte une partie de support du boîtier (14) montée tournante sur la tige (8) et une partie extérieure de boîtier (15) pouvant être enfilée dans la direction axiale sur la tige (8) et reliée sans outil de manière séparable à la partie de support de boîtier (14), la partie extérieure de boîtier (15) enfermant, à l'état relié à la partie de support de boîtier (14), un compartiment d'aspiration (16) qui est relié d'une part au volume intérieur (17) de la mèche, lorsque la mèche creuse (2) est fixée, et d'autre part à l'ouverture de raccordement (13) disposée sur la partie extérieure de boîtier (15).

2. Porte-mèche selon la revendication 1, **caractérisé en ce que** la partie de support de boîtier (14) enferme la tige (8) en formant un espace annulaire (18) par lequel le compartiment d'aspiration (16) est relié au volume intérieur (17) de la mèche.

3. Porte-mèche selon la revendication 2, **caractérisé en ce que** la partie de support de boîtier (14) forme une paroi annulaire (19), qui est disposée entre le compartiment d'aspiration (16) et l'espace annulaire (18) et qui contient au moins un évidement de passage (20).

4. Porte-mèche selon la revendication 3, **caractérisé en ce que** la partie de support de boîtier (14) comporte, dans sa zone d'extrémité tournée vers la mèche creuse (2), lorsque celle-ci est fixée, une saillie annulaire (27) dépassant radialement vers l'extérieur de la paroi annulaire (19), avec laquelle l'extrémité associée de la partie extérieure de boîtier (15) peut être assemblée.

5. Porte-mèche selon l'une des revendications 2 à 4, **caractérisé en ce que** la partie de support de boîtier (14) est montée tournante sur la tige (8) dans sa zone d'extrémité tournée à l'opposé de la mèche creuse (2) lorsque celle-ci est fixée.

6. Porte-mèche selon l'une des revendications 2 à 5, **caractérisé en ce que** la partie extérieure de boîtier (15) forme, dans sa zone d'extrémité tournée à l'opposé de la mèche creuse (2), lorsque celle-ci est fixée, une paroi de fermeture (31) de forme annulaire, s'étendant radialement vers l'intérieur jusqu'à la partie de support de boîtier (14).

7. Porte-mèche selon la revendication 6, **caractérisé en ce que** la paroi de fermeture (31) ou une partie formant col (32), placée radialement à l'intérieur en L contre la paroi de fermeture, de la partie extérieure de boîtier (15), est assemblée avec la partie de support de boîtier (14).

8. Porte-mèche selon l'une des revendications 1 à 7, **caractérisé en ce que** la partie extérieure de boîtier (15) peut être assemblée avec serrage et/ou accrochage avec la partie de support de boîtier (14).

9. Porte-mèche selon l'une des revendications 1 à 8, **caractérisé en ce que** le porte-mèche (1) comporte, dans sa zone terminale tournée vers la mèche creuse (2) lorsque celle-ci est fixée, un élément de fixation (35) de type plateau destiné à s'engager dans la mèche creuse (2) en recouvrant le volume intérieur (17) de la mèche et pour la fixation de la mèche creuse (2), lequel élément de fixation contient au moins une ouverture de passage (36) dirigée axialement à travers laquelle le compartiment d'aspiration (16) est relié au volume intérieur (17) de la mèche.

10. Porte-mèche selon la revendication 9, **caractérisé en ce que** le la partie de support de boîtier (14), enfermant la tige (8) en formant l'espace annulaire (18), s'étend jusqu'à l'élément de fixation (35) de type plateau et recouvre au moins la zone de l'élément de fixation (35) de type plateau, contenant le ou les ouvertures de passage (36).

11. Porte-mèche selon la revendication 10, **caractérisé en ce que** l'élément de fixation (35) de type plateau comporte, sur sa face supérieure tournée vers le boîtier d'aspiration de poussière (11), une paroi périphérique (37) verticale qui passe extérieurement dans la direction axiale sur la zone d'extrémité, tournée vers elle, de la partie de support de boîtier (14).

12. Porte-mèche selon la revendication 10 ou 11, **caractérisé en ce que** la partie de support de boîtier (14) est ouverte sur sa face inférieure (38) tournée vers l'élément de fixation (35) de type plateau.
